# EUROPEAN PATENT SPECIFICATION

(11) **EP 2 098 419 B1**
(45) Date of publication and mention of the grant of the patent: **23.01.2013**
(21) Application number: 09002695.6
(22) Date of filing: 25.02.2009
(51) Int. Cl.: B60R 25/04, G07C 9/00

(54) **Hand or wrist accessory**
Hand- oder Handgelenkaccessoir
Accessoire pour main ou poignet

(30) Priority: 29.02.2008 JP 2008050736
(43) Date of publication of application: 09.09.2009
(73) Proprietor: Yamaha Motor Electronics Co., Ltd., Shuchi-gun, Shizuoka-ken (JP)
(72) Inventor: Tsuji, Mitsuru, Shuchi-gun, Shizuoka-ken (JP)
(74) Representative: Grünecker, Kinkeldey, Stockmair & Schwanhäusser

(56) References cited:
- EP-A2- 0 960 995
- EP-A2- 1 067 028
- WO-A2-03/079298
- FR-A1- 2 740 500
- JP-A- 2007 099 049
- US-A1- 2005 023 901
- US-A1- 2006 131 959
- US-A1- 2007 120 642
- US-A1- 2007 241 862
- US-B1- 6 695 207

## Description

The present invention relates to an antitheft system of a straddle-type vehicle, hand or wrist accessory, in particular applied to a straddle-type antitheft system prohibiting manipulation of a vehicle body without authentication that a driver is an identical person having a proper ID.

The prior art document US 2007/0241862 A1 discloses a transponder authorization system, wherein a specific embodiment refers to a glove having a non-powered transponder wearable by a rider of a vehicle, such that a respective accessory main body is attachable to the hand or the wrist of the rider, wherein a transponder is provided for an identification transmission. Alternatively, said prior art document also discloses a helmet having a different type of transponder which is powered by a battery and it is generally indicated that the transponders included in the operator's devices can be powered by a suitable battery in order to increase the range of the transponder.

The further prior art document US 2005/0023901 A1 teaches a non-ignition switch vehicle enabling system. Said system comprises a key having a key-powered source transponder and a key antenna. Said key is cooperating with a base station provided with a key transceiver and a position sensor. The power source of the key may have energy stored therein or may receive energy from an electric field generated by the base station.

The further relevant prior art document WO 03/079298 A2 teaches a passive entry system for use in providing access to a vehicle which incorporates a circuit associated with a personal use item utilized by the vehicle operator for some function other than the vehicle access control. According to the specific embodiment disclosed in said prior art document, a watchband provided with such control circuit and being powered by a query signal from a vehicle or by a battery is disclosed. In particular, said circuit is powered by a conductive link or may utilize the watch battery for sending its signals.

US 2007/0120642 A1 discloses a key fob reader in which a Hall effect switch can sense the presence of a magnet on the key fob.

There is also known a key system for turning on a main switch of a vehicle body by inserting a key into a keyhole. Development of a smart key system that can dispense with this key and that can turn on a main switch of a vehicle body after making an ID check for antitheft purposes is under way. This smart key system is configured as follows. A driver carries an IC card as disclosed in, for example, Japanese Patent Application Laid-Open No. 2007-99049 and depresses a request switch provided in the vehicle body. Depression of the request switch triggers the smart key system to perform an ID authentication. For this ID authentication, a radio wave at a high frequency (several hundreds of megahertz (MHz)) such as UHF is used as a communication radio wave. If a communication is held at such a high frequency, a communication range can be made wide to about 80 centimeters (cm) as described in paragraph 0022 of the application above. A battery included in the smart key supplies power for transmitting an ID signal from the smart key at this time.

A driver of a straddle-type vehicle normally wears gloves when driving the vehicle. In case of a conventional key system, while wearing gloves, the driver finds it cumbersome to take out a key from a pocket or the like or to put the key therein and is required to put off one of the gloves whenever taking out or putting in the key. If the driver stops an engine while driving, for example, when stopping in a gas station on the way, then the driver temporarily puts off one of the gloves, takes out the key from the pocket or the like, manipulates this key, puts the key in the pocket or the like after an ID authentication, puts on the glove again and starts driving. Furthermore, in case of the smart key system, the driver is required to always carry the above-stated IC card whenever he or she drives the vehicle.

Meanwhile, development of a vehicle antitheft system using a transponder is underway. This system performs an ID authentication by an LF communication, that is, using a radio wave at a low frequency (134 kilohertz (kHz)). This LF communication has a narrow communication range, which is about several centimeters. To perform the ID authentication, therefore, it is necessary to put a key including the transponder close to an LF antenna provided in the vehicle. Accordingly, as a key system using the transponder, a conventional key system configured to insert the key into the keyhole is mainly adopted. Since the transponder is charged by a charging radio wave from the vehicle body whenever the ID authentication is performed, there is no need to use a battery that is required with the smart key stated above and the driver can use the transponder without regard for battery exhaustion. However, it is necessary to carry out a cumbersome operation for inserting the key into the keyhole or turning the key.

The present invention has been made in light of the above-stated conventional techniques.

It is an objective of the present invention to provide an antitheft system of a straddle-type vehicle capable of ensuring a prompt ID authentication and lessening a driver's burden without causing the driver to carry out cumbersome operations.

According to the present invention, said objective is solved by an antitheft system of a straddle-type vehicle having the features of independent claim 1. Preferred embodiments and applications thereof are laid down in the further claims.

Preferably, the accessory main body is a glove.

Further, preferably the transponder is attached into a fingertip portion of the glove.

Still further, preferably the accessory main body is a bracelet attachable to a wrist of the rider so as to be wound around said wrist.

Yet further still, preferably the accessory main body is a ring attachable to a finger of the rider by being put on said finger.

There is also further provided a straddle-type vehicle having an antitheft system according to one of the above embodiments, wherein the hand or wrist accessory is worn by a rider of the straddle-type vehicle.

In the following, the present invention is explained in greater detail by means of embodiments thereof in conjunction with the accompanying drawings, wherein:
- Fig. 1: is a schematic diagram of a hand or wrist accessory ;
- Fig. 2: is a schematic diagram of a switching panel included in a vehicle body;
- Fig. 3: is a schematic diagram showing a state in which an ID authentication is being performed using the hand or wrist accessory ;
- Fig. 4: is a block diagram of a straddle-type vehicle antitheft system using the hand or wrist accessory ;
- Fig. 5: is a schematic diagram of another embodiment of a hand or wrist accessory;
- Fig. 6: is a schematic diagram of a switching panel included in a vehicle body if the hand or wrist accessory shown in Fig. 5 is employed;
- Fig. 7: is a schematic diagram of yet another embodiment of a hand or wrist accessory; and
- Fig. 8: is a schematic diagram of still another embodiment of a hand or wrist accessory.

Among others, the following reference signs are used in the figures:

1: Accessory main body, 1a: Glove, 2: Transponder, 3: ID transmitter, 4: Capacitor, 5: Switch, 6: Request switch, 7: Box switch, 8: Seat cover switch, 9: Keyless unit, 10: Substrate, 11: Charging oscillation element, 12: Antenna, 13: CPU, 14: Vehicle body, 15: Battery, 16: Power supply circuit, 17: Functional unit, 18: Interface circuit, 19: ECU, 20: LED, 21: Front box, 22: Seat cover, 23: Vehicle loads, 24: System relay, 25: Motor unit, 26: Fuel lid, 27: Steering wheel lock, 28: Magnet, and 29: Hall unit

An embodiment of a hand or wrist accessory is used in a straddle-type vehicle antitheft system, the straddle-type vehicle antitheft system including a transponder including an ID for an identical person authentication; and a vehicle ridden and driven by an identical person, the transponder including an ID transmitter for transmitting the ID; and a capacitor serving as a power supply of the ID transmitter, and the vehicle including a CPU for checking an ID transmitted from the transponder; an antenna for receiving the ID from the transponder; and a charging oscillation element for charging the capacitor, wherein an accessory main body attached to a hand or a wrist of a driver includes the transponder. In general, a straddle-type vehicle has a body frame and a seat on which a rider can be seated straddling the body frame when being seated.

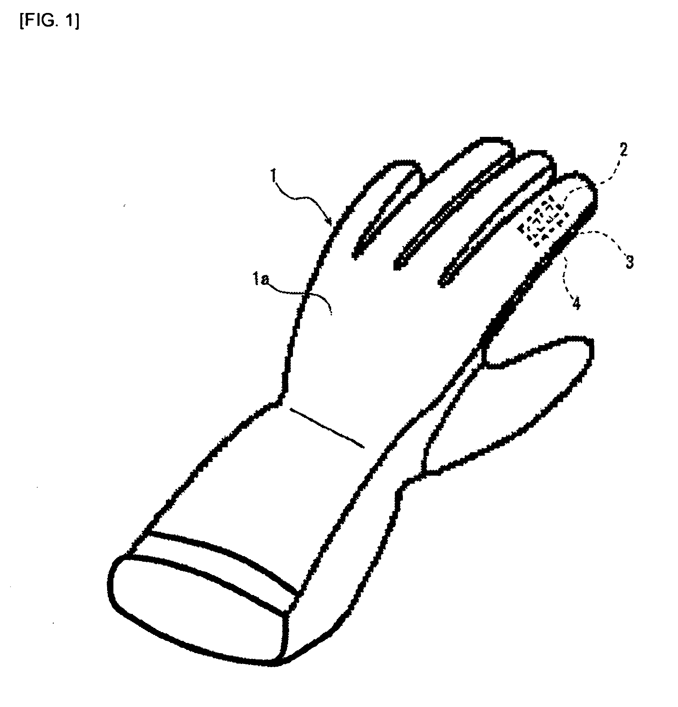

Fig. 1 is a schematic diagram of a hand or wrist accessory.

As shown, an accessory main body 1 is a glove 1 a. A driver drives a straddle-type vehicle (not shown) such as a motorcycle with this glove 1 a on. A transponder 2 is attached into a fingertip portion of the glove 1a. The transponder 2 includes an ID transmitter 3 transmitting an ID for an identical person authentication and a capacitor 4 serving as a power supply of this ID transmitter 3. The transponder 2 is chip-shaped and has a size of about 10 millimeters (mm) long, 5 mm wide and 3 mm high.

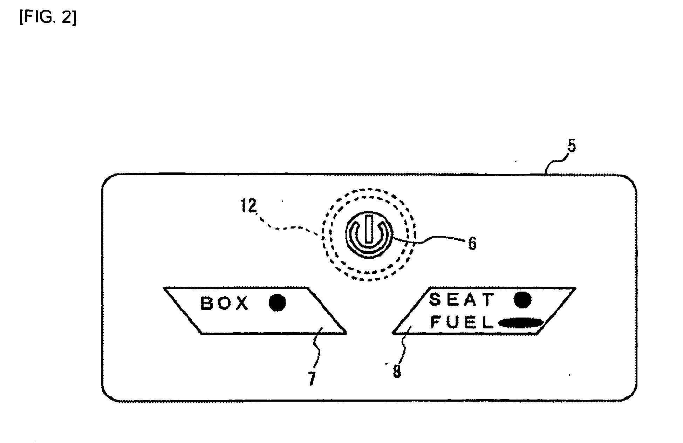

Fig. 2 is a schematic diagram of a switching panel included in a vehicle body.

A switching panel 5 is disposed approximately at a central position or near the central position of a steering wheel of the straddle-type vehicle (not shown). The switching panel 5 includes switches for fulfilling various functions of the vehicle body. The switches are, for example, a request switch 6, a box switch 7 and a seat cover switch 8. The request switch 6 is a power switch for the entire vehicle body. If the driver depresses this request switch 6 and is completed with an ID authentication to be described later, the entire vehicle body enters an electrified state. The box switch 7 is a switch for opening a lid of a storage provided in the vehicle body. The seat cover switch 8 is a switch for opening a seat that serves as a cover of a storage portion under a seat for storing a helmet and a like. These switches can be used to fulfill other functions as well. For example, the seat cover switch 8 can be used so that a seat cover is opened by depressing the seat cover switch 8 once and so that a fuel lid that is a cap of a filler opening is opened by depressing the seat cover switch 8 for long time. As display for the functions, a circle meaning one depression is shown next to a character of SEAT and an ellipse meaning long depression is shown next to a character of FUEL. An antenna 12 used for the ID authentication, to be described later, is arranged within the switching panel 5 to surround the request switch 6.

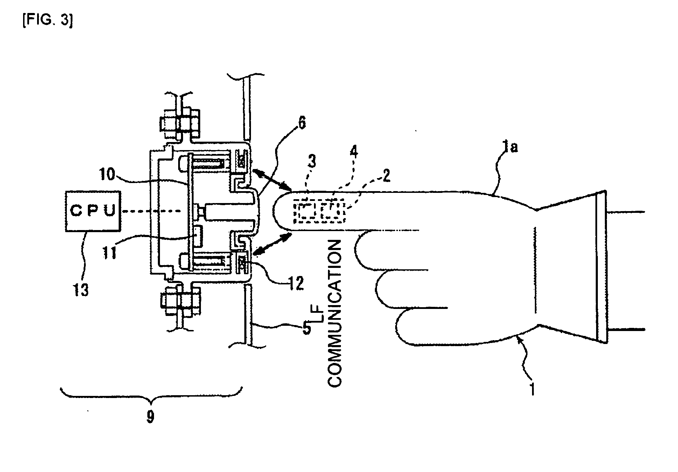

Fig. 3 is a schematic diagram showing a state in which the ID authentication is being performed using the hand or wrist accessory .

The driver depresses the request switch 6 to thereby perform an ID authentication. When the driver depresses the request switch 6, then a. CPU 13 recognizes the depression of the request switch 6 and a charging oscillation element 11 on a substrate 10 within a keyless unit 9 is electrified. Thereafter, a radio wave for charging is transmitted from the antenna 12 to the transponder 2. The capacitor 4 included in the transponder 2 is thereby charged. The transponder 2 transmits an ID signal from the ID transmitter 3 using this capacitor 4 as a power supply. This communication is held by an LF communication via the antenna 12. Using the transmitted ID signal, the CPU 13 included in the vehicle body authenticates whether or not a driver's ID is a proper ID. If the CPU 13 authenticates that the driver's ID is the proper ID, the entire vehicle body turns into the electrified state, that is, a main switch is turned on. Thereafter, the driver starts an engine and starts driving the vehicle by depression of a starter switch or the like. It is to be noted that this request switch 6 may also function as the starter switch.

As can be seen, the transponder 2 is included in the accessory main body 1 (glove 1 a) attached to a driver's hand or wrist. Therefore, the ID authentication can be performed only by causing the driver to depress the request switch 6 and to hold up this accessory main body 1 to shade the antenna of the vehicle body. Since the accessory main body 1 is the glove 1 a, there is no need to carry out an operation for taking out a key from a pocket as compared with a system in which an ID transmitter is incorporated in an item carried by the driver such as the key. The driver finds it quite cumbersome to perform such an operation particularly with the glove 1 a on because the glove 1 a is often made of a thick material for safety purposes. Moreover, there is no need to carry out an operation for inserting the key into the keyhole and turning on the key. By incorporating the transponder 2 in the glove 1a, the ID authentication can be performed without causing the driver to carry out the cumbersome operations. It is, therefore, possible to greatly lessen driver's burden for the ID authentication. This advantage is particularly effective if the driver stops or starts the engine when dropping in a gas station on the way. Furthermore, as stated above, the accessory main body 1 is not the item carried by the driver but the glove 1 a to be attached for the driver to wear. In particular, the hand or wrist accessory is attached to a hand or a wrist of the rider of the straddle-type vehicle when riding said straddle-type vehicle. It is, therefore, possible to decrease the number of items carried by the drive during driving and further lessen the driver's burden. It is also possible that the transponder 2 is not directly integrated in a glove 1 a, a bracelet 1 b or a ring 1 c, but in other pieces which are usually located near the hand or wrist of the rider. In particular, the transponder 2 can be integrated in pieces of clothing, such as jackets.

Moreover, the transponder 2 is attached into the fingertip portion of the glove 1 a and the request switch 6 and the antenna 12 are arranged to be close to each other. Therefore, when the driver depresses the request switch 6, the ID transmitter 3 is located near the antenna 12. It is therefore, possible to simultaneously charge the capacitor 4 by depression of the request switch 6 and transmit the ID to the antenna 12 from the ID transmitter 3, and efficiently and promptly perform the ID authentication.

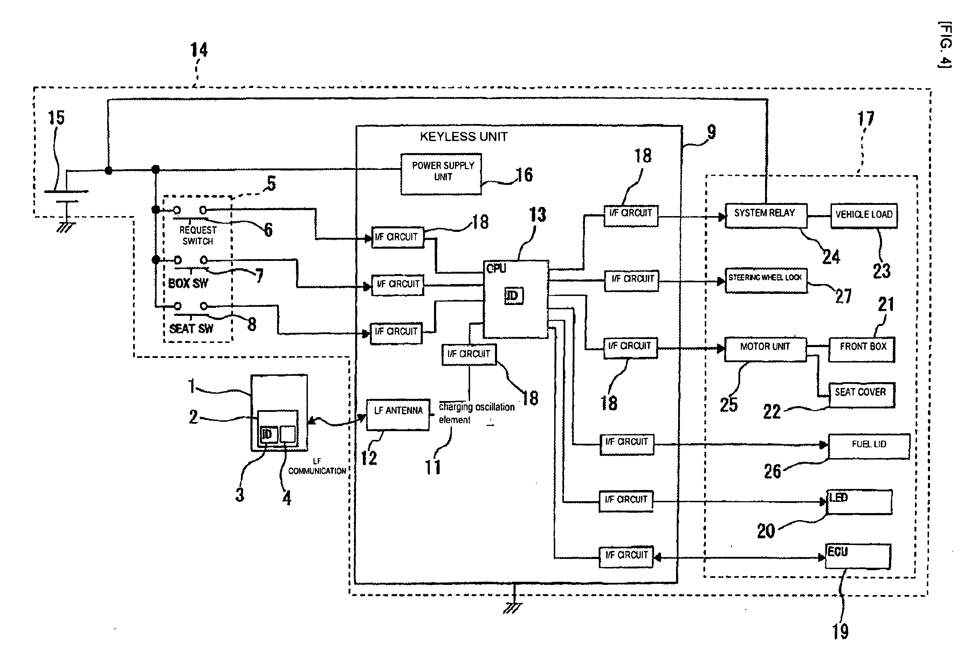

Fig. 4 is a block diagram of a straddle-type vehicle antitheft system using the hand or wrist accessory.

As shown in Fig. 4, a vehicle body 14 is configured to include a battery 15, the switching panel 5, the keyless unit 9 and a functional unit 17 that fulfills various functions of the straddle-type vehicle. As already stated, the switching panel 5 includes the request switch 6, the box switch 7 and the seat cover switch 8. The keyless unit 9 includes a power supply circuit 16, the CPU 13, the antenna 12 and a plurality of interface circuits (I/F circuits) 18 for connecting respective elements to the CPU 13. Respective elements and the like included in the functional unit 17 will be described later.

The vehicle body 14 includes the battery 15 and electric power (power) is accumulated therein. The power supply circuit 16 connected to this battery 15 supplies power for the keyless unit 9. If the driver depresses the request switch 6, then the CPU 13 recognizes the depression thereof, power is supplied to the charging oscillation element 11 and a charging radio wave is transmitted from the antenna 12 by the LF communication. This charging radio wave charges the capacitor 4 serving as the power supply of the transponder 2 included in the accessory main body 1. Using the power charged on the capacitor 4, the ID transmitter 3 included in the transponder 2 transmits an ID signal to the antenna 12 by the LF communication. The ID signal transmitted from the transponder 2 is compared with an ID held by the CPU 13 within the keyless unit 9 via the charging oscillation element 11. If the two IDs coincide with each other and the ID signal transmitted from the transponder 2 is a proper ID, the entire vehicle 14 enters the electrified state, that is, the main switch is turned on. A comparison result is displayed by, for example, a way an LED 20 shown in the functional unit 17 turns on and off.

An ECU 19 also includes an ID authentication function. If the ID is authenticated as a proper ID, a communication is held between the CPU 13 and the ECU 19 via one of the interface circuits 18 and a steering wheel lock 27 is unlocked. Ignition of the engine is also permitted. Further, the CPU 13 drives a system relay 24. A vehicle load such as a headlight or taillight is thus powered by a battery 15. Thereafter, by driver's manipulating the starter switch (not shown), the engine starts. In a state in which the ID is authenticated as the proper ID, a front box 21 is opened or a seat cover 22 is opened by driver's depressing the box switch 7 or the seat cover switch 8, respectively.

If the driver depresses the box switch 7 in a state in which the ID is not authenticated, the CPU 13 performs the ID authentication as stated above. If the ID is authenticated as the proper ID, the front box 21 opens via a motor unit 25. Likewise, if the driver depresses the seat cover switch 8 in the state in which the ID is not authenticated, the seat cover 22 opens via the motor unit 25 after authenticating that the ID is the proper ID. As stated above, if the seat cover switch 8 also functions as the switch for opening a fuel lid 26 and the driver performs an operation (for example, depresses the seat cover switch 8 for long time) so as to open the fuel lid 26 or if the driver depresses a fuel lid switch (not shown) provided separately from the seat cover switch 8, the fuel lid 26 shown in the functional unit 17 opens.

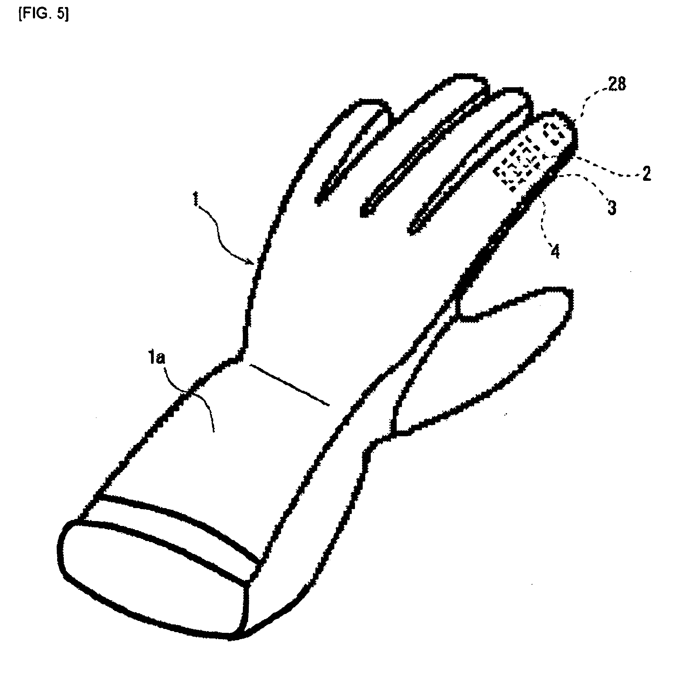

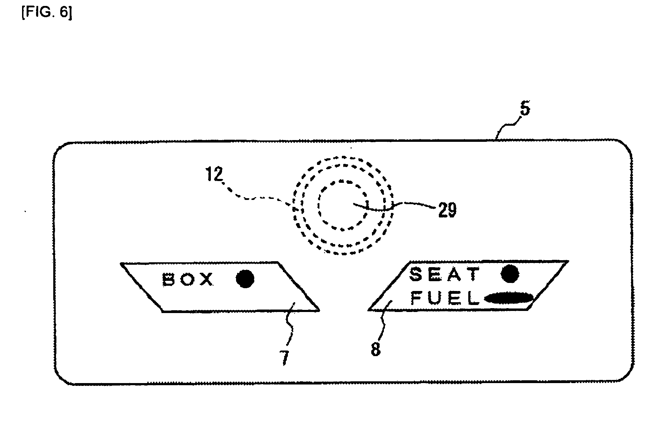

Fig. 5 is a schematic diagram of the hand or wrist accessory according to an embodiment. Fig. 6 is a schematic diagram of the switching panel included in the vehicle body if the hand or wrist accessory shown in Fig. 5 is employed.

As shown in Fig. 5, the accessory main body 1 is the glove 1 a similarly to Fig. 1. A magnet 28 is attached into the fingertip portion of this glove 1 a. The transponder 2 is also attached into the fingertip portion of the glove 1 a similarly to Fig. 1. As shown in Fig. 6, a HALL IC 29 is arranged within the switching panel 5. If the ID authentication is to be performed, the driver puts a portion of the glove 1 a into which the magnet 28 is attached close to the HALL IC 29 of the switching panel 5 with the glove 1 a on. If recognizing that the magnet 28 is close to the HALL IC 29, the HALL IC 29 starts carrying current to the charging oscillation element so that the CPU starts the ID authentication. ID authentication operation is similar to that described with reference to Figs. 3 and 4. In this way, by including the magnet 28 as well as the transponder 2 in the glove 1 a, the ID authentication can be performed without causing the driver to touch the vehicle body. Therefore, there is no need to depress a switch or the like for the ID authentication, driver's action for the ID authentication is reduced and the driver's burden can be lessened. Moreover, by including the transponder 2 and the magnet 28 in the fingertip portion of the same finger of the glove 1 a and arranging the HALL IC 29 and the antenna 12 to be proximate to each other in the switching panel 5, it is possible to simultaneously perform an ID authentication start operation and the ID authentication. This can thereby realize a prompt ID authentication step.

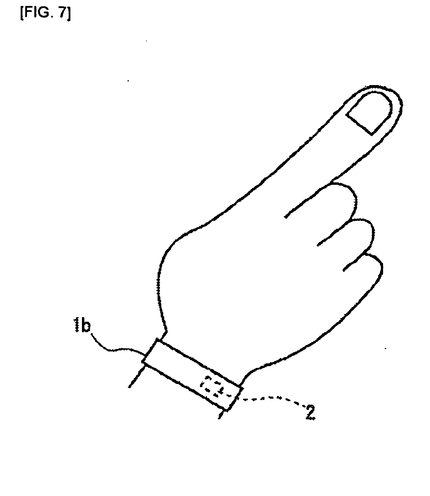

Fig. 7 is a schematic diagram of another embodiment of a hand or wrist accessory.

As shown, an accessory main body 1 is a bracelet 1 b attached to a wrist. Even if a transponder 2 is attached into the bracelet 1b as shown, an ID authentication can be performed only by holding up the bracelet 1b to shade an antenna of a switching panel without performing an operation for taking out a smart key or the like from a pocket. The ID authentication can be, therefore, performed efficiently and promptly. It is to be noted that Fig. 7 does not show a capacitor and an ID transmitter included in the transponder 2. An ID authentication step is similar to that stated above. The magnet 28 shown in Fig. 5 is attached into the bracelet 1b and the ID authentication is performed using a HALL IC.

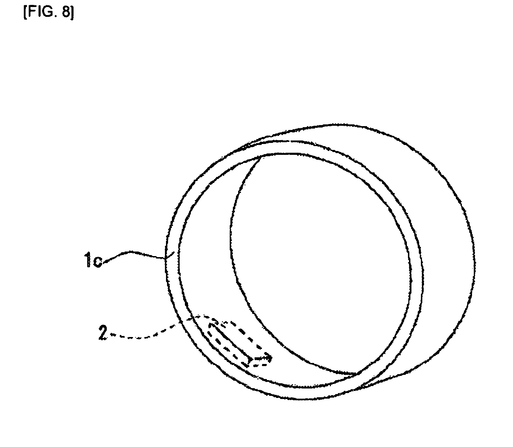

Fig. 8 is a schematic diagram of yet another embodiment of a hand or wrist accessory.

As shown, an accessory main body 1 is a ring 1c attached to a finger by putting the ring 1c on the finger. Even if a transponder 2 is attached into the ring 1 c as shown, an ID authentication can be performed only by holding up the ring 1 c to shade an antenna of a switching panel without performing an operation for taking out a smart key or the like from a pocket. The ID authentication can be, therefore, performed efficiently and promptly. It is to be noted that Fig. 8 does not show a capacitor and an ID transmitter included in the transponder 2. An ID authentication step is similar to that stated above. The magnet 28 shown in Fig. 5 is attached into the ring 1c and the ID authentication is performed using a HALL IC.

The description above discloses (among others) an embodiment of a hand or wrist accessory used in a straddle-type vehicle antitheft system, the straddle-type vehicle antitheft system comprising: a transponder including an ID for an identical person authentication; and a vehicle ridden and driven by an identical person, the transponder including an ID transmitter for transmitting the ID, and a capacitor serving as a power supply of the ID transmitter, and the vehicle including a CPU for checking an ID transmitted from the transponder; an antenna for receiving the ID from the transponder; and a charging oscillation element for charging the capacitor, wherein an accessory main body attached to a hand or a wrist of a driver includes the transponder.

Accordingly, the accessory main body attached to the hand or the wrist of the driver includes the transponder. Due to this, the ID authentication can be performed only by holding up this accessory main body to shade an antenna of a vehicle body. Since the accessory main body is not an item carried by the driver such as a key or a smart key but an item to be attached to the driver's hand or wrist, it is possible to dispense with an operation for taking the key from a pocket during the ID authentication. Therefore, the ID authentication can be performed without causing the driver to carry out the cumbersome operations. It is, therefore, possible to greatly lessen driver's burden for the ID authentication. Furthermore, as stated above, the accessory main body is not the item carried by the driver but the item to be attached so that the driver can wear the item. It is, therefore, possible to reduce the number of items carried by the drive during driving and further lessen the driver's burden.

The accessory main body includes a magnet, and the vehicle includes a HALL IC recognizing that the magnet is put close to the HALL IC and carrying a current to the charging oscillation element.

Accordingly, the accessory main body includes the magnet. Therefore, by the driver's holding up the accessory main body to shade a HALL IC portion of the vehicle body, a capacitor is charged and a communication for the ID authentication starts between the transponder and the antenna. Therefore, the driver can perform the ID authentication without touching the vehicle. As a result, there is no need to depress a switch or the like for the ID authentication, which further reduces driver's operation steps and lessens driver's burden for the ID authentication.

Preferably, the accessory main body is a glove.

Generally, the driver always wears gloves when driving a straddle-type vehicle. Since the transponder is attached into one of these gloves, the ID authentication can be performed efficiently and promptly only by driver's holding up the glove to shade the HALL IC portion of the vehicle body and convenience for the ID authentication can be improved.

Preferably, the transponder is attached into a fingertip portion of the glove.

Therefore, the ID authentication can be performed only by driver's holding up the fingertip to shade the antenna while the driver puts on the glove. Since the fingertip is a region that can be held up most easily, the ID authentication can be performed most easily and the convenience can be further improved.

Preferably, the accessory main body is a bracelet attached to a wrist by being wound around the wrist.

Since the wrist is a region that can be held up easily, the driver can easily hold up the transponder attached into the bracelet to shade the antenna and the ID authentication can be performed efficiently and promptly.

Preferably, the accessory main body is a ring attached to a finger by being put on the finger.

Since the finger is a region that can be held up easily, the driver can easily hold up the transponder attached into the ring to shade the antenna and the ID authentication can be performed efficiently and promptly.

In order to provide a hand or wrist accessory capable of decreasing the number of items of carried by a driver, enabling a prompt ID authentication and so as to lessen driver's burden without causing the driver to carry out cumbersome operations, an embodiment of a hand or wrist accessory is used in a straddle-type vehicle antitheft system including a transponder 2 including an ID for an identical person authentication; and a vehicle ridden and driven by an identical person, the transponder 2 including an ID transmitter 3 for transmitting the ID; and a capacitor 4 serving as a power supply of the ID transmitter 3, the vehicle including a CPU 13 for checking an ID transmitted from the transponder 2; an antenna 12 for receiving the ID from the transponder 2; and a charging oscillation element 11 for charging the capacitor 4, and an accessory main body 1 attached to a hand or a wrist of a driver includes the transponder 2.

## Claims

1. Antitheft system of a straddle-type vehicle comprising:
a hand or wrist accessory wearable by a rider of the straddle-type vehicle, the hand or wrist accessory comprising a transponder (2) including an ID for identical person authentication, wherein an accessory main body (1) attachable to the hand or the wrist of the rider includes the transponder (2), the transponder (2) includes an ID transmitter (3) configured to transmit the ID, a power supply is configured to supply power to the ID transmitter (3), wherein the power supply comprises a capacitor (4) and the power supply is chargeable by means of radio waves, the accessory main body (1) includes a magnet (28) in proximity to the transponder (2); and
a CPU (13) of the straddle-type vehicle configured to check the ID transmitted from the transponder (2) of the hand or wrist accessory, an antenna (12) is configured to receive the ID from the transponder (2) of the hand or wrist accessory, and a charging oscillation element (11) is configured to charge the power supply of the hand or wrist accessory, wherein a Hall IC (29) is configured to recognize that the magnet (28) of the hand or wrist accessory is put close the Hall IC (29) and, is configured to deliver a current to the charging oscillation element (11).

2. Antitheft system according to claim 1, wherein the accessory main body (1) is a glove (1a).

3. Antitheft system according to claim 2, wherein the transponder (2) is attached into a fingertip portion of the glove (1a).

4. Antitheft system according to claim 1, wherein the accessory main body (1) is a bracelet (1b) attachable to a wrist of the rider so as to be wound around said wrist.

5. Antitheft system according to claim 1, wherein the accessory main body (1) is a ring (1c) attachable to a finger of the rider by being put on said finger.

6. Straddle-type vehicle having an antitheft system according to one of claims 1 to 5, wherein the hand or wrist accessory is worn by a rider of the straddle-type vehicle.

## Patentansprüche

1. Diebstahlverhinderungssystem eines Fahrzeuges vom Spreizsitz-Typ, aufweisend:
ein Hand- oder Handgelenk-Zubehör, tragbar durch einen Fahrer des Fahrzeuges vom Spreizsitz-Typ, wobei das Hand- oder Handgelenk-Zubehör einen Transponder (2) aufweist, enthaltend eine ID für eine identische Personen-Authentizität, wobei ein Zubehörhauptkörper (1), verbindbar mit der Hand oder dem Handgelenk des Fahrers, den Transponder (2) enthält, der Transponder (2) einen ID-Sender (3) enthält, konfiguriert die ID zu senden, wobei eine Energiezuführung konfiguriert ist, Energie zu dem ID-Sender (3) zuzuführen, wobei die Energiezuführung einen Kondensator (4) aufweist und die Energiezuführung mittels Radiowellen aufladbar ist, wobei der Zubehörhauptkörper (1) einen Magnet (28) in der Nähe des Transponders (2) enthält; und
eine CPU (13) des Fahrzeuges vom Spreizsitz-Typ, konfiguriert die ID, übertragen von dem Transponder (2) des Hand- oder Handgelenk-Zubehörs, zu prüfen, eine Antenne (12) konfiguriert ist, die ID von dem Transponder (2) des Hand- oder Handgelenk-Zubehörs, zu empfangen und ein Aufladungs-Oszillationselement (11) konfiguriert ist, die Energiezuführung des Hand- oder Handgelenk-Zubehörs aufzuladen, wobei ein Hall-IC (29) konfiguriert ist, wahrzunehmen, dass der Magnet (28) des Hand- oder Handgelenk-Zubehörs nahe zu dem Hall-IC (29) angeordnet und konfiguriert ist, einen Strom zu dem Aufladungs-Oszillationselement (11) zu liefern.

2. Diebstahlverhinderungssystem nach Anspruch 1, wobei der Zubehörhauptkörper (1) ein Handschuh (1 a) ist.

3. Diebstahlverhinderungssystem nach Anspruch 2, wobei der Transponder (2) in einem Fingerspitzenabschnitt des Handschuhs (1a) verbunden ist.

4. Diebstahlverhinderungssystem nach Anspruch 1, wobei der Zubehörhauptkörper (1) ein Armband (1 b) ist, verbindbar mit einem Handgelenk des Fahrers, um das Handgelenk geschlungen zu sein.

5. Diebstahlverhinderungssystem nach Anspruch 1, wobei der Zubehörhauptkörper (1) ein Ring (1 c) ist, verbindbar mit einem Finger des Fahrers durch Aufstreifen auf den Finger.

6. Fahrzeug vom Spreizsitz-Typ mit einem Diebstahlverhinderungssystem nach einem der Ansprüche 1 bis 5, wobei das Hand- oder Handgelenk-Zubehör durch einen Fahrer des Fahrzeuges vom Spreizsitz-Typ getragen wird.

## Revendications

1. Système antivol d'un véhicule du type à enfourcher, comprenant:
un accessoire pour la main ou le poignet qui est apte à être porté par un conducteur du véhicule du type à enfourcher, l'accessoire pour la main ou le poignet comprenant un transpondeur (2) contenant un identifiant pour l'authentification d'une personne, étant précisé qu'un corps principal d'accessoire (1) apte à être fixé à la main ou au poignet du conducteur contient le transpondeur (2), que le transpondeur (2) contient un transmetteur d'identifiant (3) conçu pour transmettre l'identifiant, et qu'une alimentation électrique est conçue pour l'alimentation électrique du transmetteur d'identifiant (3), et étant précisé que l'alimentation électrique comprend un condensateur (4), que ladite alimentation est apte à être chargée à l'aide d'ondes radio, et que le corps principal d'accessoire (1) contient un aimant (28) à proximité du transpondeur (2) ; et
une unité centrale (13) du véhicule du type à enfourcher, conçue pour vérifier l'identifiant transmis à partir du transpondeur (2) de l'accessoire pour la main ou le poignet, une antenne (12) est conçue pour recevoir l'identifiant à partir du transpondeur (2) de l'accessoire pour la main ou le poignet, et un élément oscillant de chargement (11) est conçu pour charger l'alimentation électrique de l'accessoire pour la main ou le poignet, étant précisé qu'un circuit intégré à effet Hall (29) est conçu pour reconnaître que l'aimant (28) de l'accessoire pour la main ou le poignet est placé près dudit circuit intégré à effet Hall (29), et est conçu pour fournir un courant à l'élément oscillant de chargement (11).

2. Système antivol selon la revendication 1, étant précisé que le corps principal d'accessoire (1) est un gant (1a) .

3. Système antivol selon la revendication 2, étant précisé que le transpondeur (2) est fixé dans une partie de bout de doigt du gant (1a).

4. Système antivol selon la revendication 1, étant précisé que le corps principal d'accessoire (1) est un bracelet (1b) apte à être fixé à un poignet du conducteur de manière à être enroulé autour du poignet.

5. Système antivol selon la revendication 1, étant précisé que le corps principal d'accessoire (1) est une bague (1c) apte à être fixée à un doigt du conducteur en étant enfilée sur ce doigt.

6. Véhicule du type à enfourcher comportant un système antivol selon l'une des revendications 1 à 5, étant précisé que l'accessoire pour la main ou le poignet est porté par un conducteur dudit véhicule du type à enfourcher.
